# EUROPEAN PATENT APPLICATION

(11) **EP 4 382 753 A1**
(43) Date of publication of application: **12.06.2024**
(21) Application number: 22852806.3
(22) Date of filing: 14.07.2022
(51) Int. Cl.: F16B 19/00, F16L 5/00, F16J 15/10

(54) **GASKET**

(30) Priority: 03.08.2021 JP 2021127305
(71) Applicant: NOK Corporation, Tokyo 105-8585 (JP)
(72) Inventor: ITO Ryota, Aso-shi, Kumamoto 869-2231 (JP); WATANABE Mitsuo, Aso-shi, Kumamoto 869-2231 (JP)
(74) Representative: Global IP Europe Patentanwaltskanzlei
(86) International application number: PCT/JP2022/027716
(87) International publication number: WO 2023/013382

(57) **Abstract**

To provide a gasket that can be easily attached to the surface of an attachment-receiving object, contributes to space saving, and has a shape that can be easily formed by molding. A rubber-made gasket 1 that can be attached to a surface of an attachment-receiving object 100 having an attachment hole 105, the rubber-made gasket 1 having: a housing section 3 having an opening 31 to be closely attached to the attachment-receiving object 100; and a protrusion 5 that is directly or indirectly continuous with an end portion 30 of the housing section 3, and has a main surface to face a surface of the attachment-receiving object 100, the protrusion 5 having: a strip-like trunk portion 51 extending from the end portion 30 in a radially-outer-side direction X of the housing section 3; and a strip-like branch portion 52 extending from the trunk portion 51 in a direction different from a radial direction X of the housing section 3, the protrusion 5 being able to be inserted into the attachment hole 105.

## Description

### FIELD

The present disclosure relates to a gasket.

### BACKGROUND

A rubber-made seal part used for the purpose of preventing the entrance of foreign matters from the outside is required to be not disengaged from a predetermined position for realizing its primary function. For example, a section of concern about disengagement of a seal at an assembly step of an equipment unit is given an engagement structure that prevents disengagement of the seal (e.g. JP-2020-193655-A; Patent Literature 1 hereinafter).

Patent Literature 1 discloses a rubber-made gasket having a cylindrical portion in which an electrical part is arranged, a flange formed at an end portion of the cylindrical portion, and a hook protruding from the flange. The hook has a base portion coupled to the flange, a front end portion coupled to the base portion, and an axis extending through the base portion and the front end portion. The front end portion has a portion whose dimension orthogonal to the axis is greater than a dimension thereof orthogonal to the axis of the base portion, and a taper portion whose dimension orthogonal to the axis decreases as the distance from the base portion increases. A cavity portion extending along the axis is formed at the front end portion. The gasket can be easily attached to a predetermined location.

### BRIEF SUMMARY

### TECHNICAL PROBLEM

A protrusion having an umbrella-like hook of the gasket described in Patent Literature 1 provides superior anti-disengagement property. Accordingly, it is applied to a seal part for a section that is of concern about disengagement or a section that is desired to surely prevent disengagement.

When a structure in which an attachment hole is provided to an attachment, and an umbrella portion is caused to be engaged with the attachment hole by pressing the umbrella portion therein is used, the engagement force is improved by making the umbrella outer radius greater than the diameter of the attachment hole. On the other hand, it becomes difficult to attach the umbrella portion, and the difficulty of attachment work increases depending on the structure or the like of an attachment-receiving object. Improvement of the attachability is demanded for space saving of units.

In addition, the molding difficulty of a seal part having an umbrella portion like the one described in Patent Literature 1 is high. Typically, such a part is molded by using a mold. When umbrella-like protrusions embedded in a mold are pulled out of and released from a mold, there is a possibility that the protrusions are damaged.

An object of the present disclosure is to provide a gasket that can be easily attached to the surface of an attachment-receiving object, contributes to space saving, and has a shape that can be easily formed by molding.

### SOLUTION TO PROBLEM

One aspect of the present disclosure is a rubber-made gasket that can be attached to a surface of an attachment-receiving object having an attachment hole, the rubber-made gasket including:
a housing section having an opening to be closely attached to the attachment-receiving object; and
a protrusion that is directly or indirectly continuous with an end portion of the housing section, and has a main surface to face a surface of the attachment-receiving object, the protrusion having: a strip-like trunk portion extending from the end portion in a radially-outer-side direction of the housing section; and a strip-like branch portion extending from the trunk portion in a direction different from a radial direction of the housing section, the protrusion being able to be inserted into the attachment hole.

### ADVANTAGEOUS EFFECTS

The present disclosure can provide a gasket that can be easily attached to the surface of an attachment-receiving object, contributes to space saving, and has a shape that can be easily formed by molding.

### BRIEF DESCRIPTION OF DRAWINGS

FIG. 1 is a schematic perspective view of a gasket of the present embodiment.
FIG. 2 is a schematic perspective view depicting a state where the gasket of the present embodiment is attached to an attachment-receiving object.
FIG. 3 is a schematic side view of a state where the gasket of the present embodiment is attached to the attachment-receiving object.
FIG. 4 is schematic plan view representing the main surface of a protrusion.
FIG. 5A and FIG. 5B are schematic diagrams for explaining a method of attaching the gasket of the present embodiment to the attachment-receiving object.

### DETAILED DESCRIPTION

Hereinbelow, a gasket of the present embodiment is explained by using the figures.

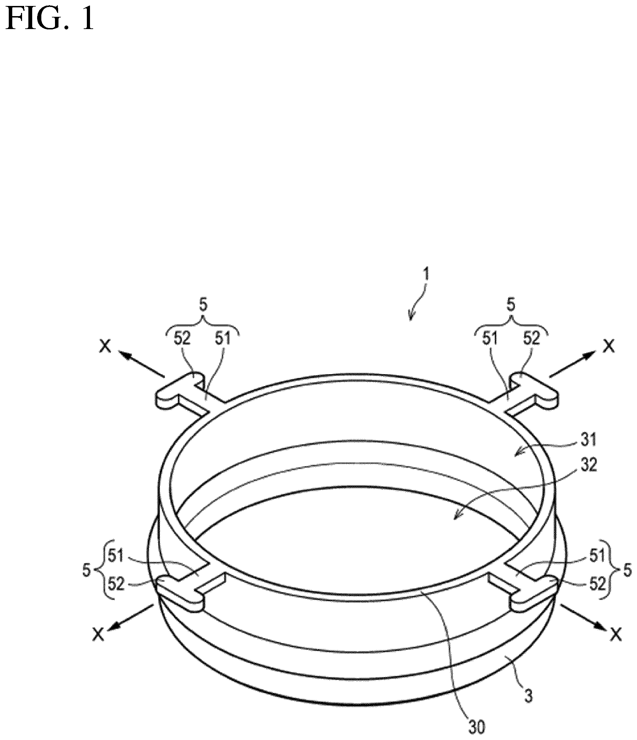

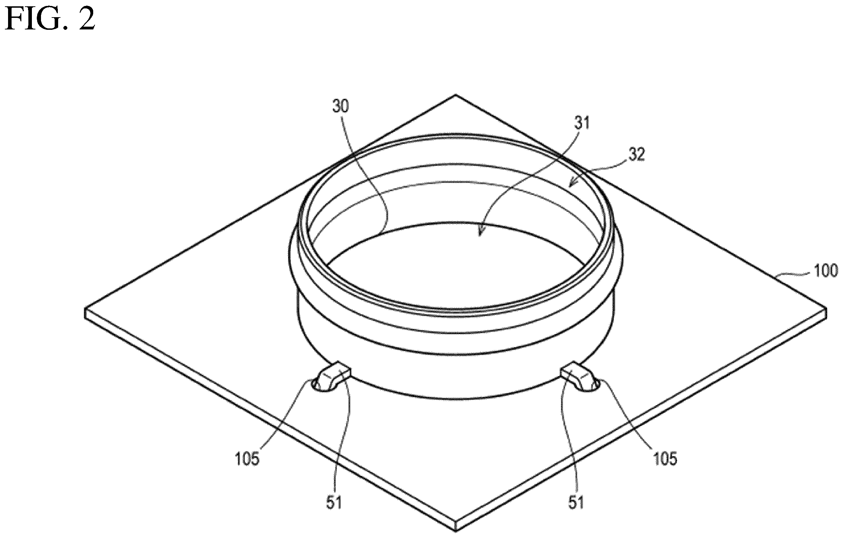

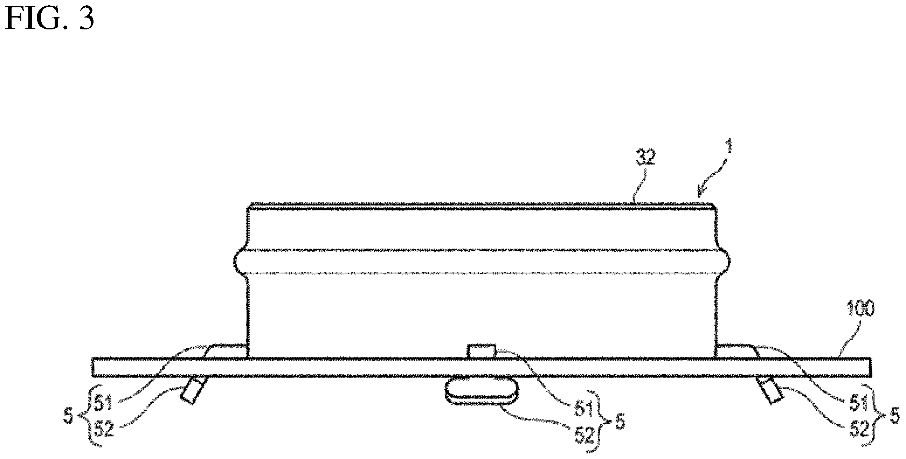

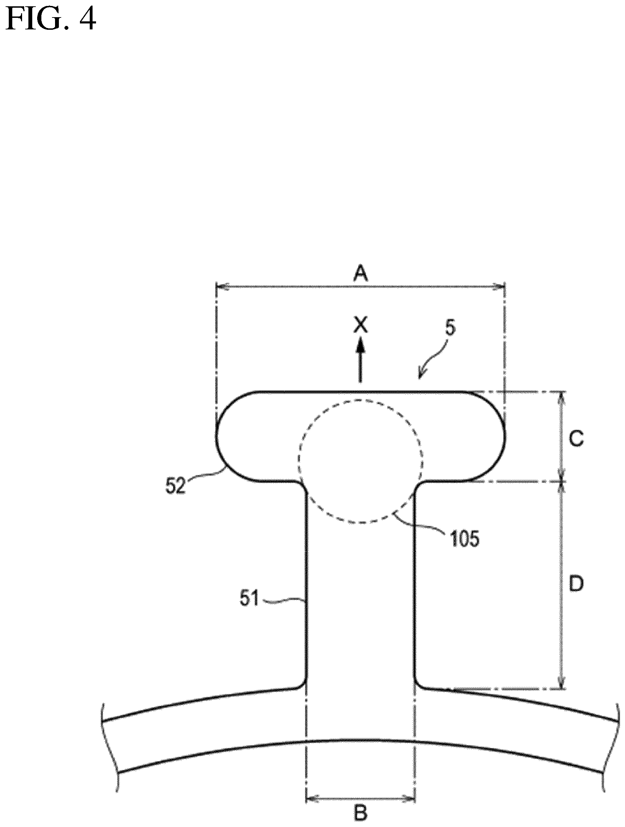

FIG. 1 is a schematic perspective view of a gasket of the present embodiment. FIG. 2 is a schematic perspective view depicting a state where the gasket of the present embodiment is attached to an attachment-receiving object. FIG. 3 is a schematic side view of a state where the gasket of the present embodiment is attached to the attachment-receiving object. FIG. 4 is schematic plan view representing the main surface of a protrusion.

As depicted in FIG. 1 to FIG. 3, a gasket 1 of the present embodiment has a housing section 3.

For example, the housing section 3 houses, as a to-be-protected object, an electrical part such as a connector of a wire used for an automobile. The housing section 3 protects the to-be-protected object from oil, dust, or the like.

The housing section 3 and protrusions 5 mentioned later include rubber. The type of rubber is not limited particularly, and, for example, may be a rubber similar to that used for conventionally known gaskets. For example, the size, thickness, shape, and the like of the rubber also may be similar to those of the conventionally known gaskets.

In FIG. 1 to FIG. 3, the housing section 3 is cylindrical. Note that as long as the housing section 3 has an opening 31, the shape and the like of the housing section 3 are not limited particularly.

The cylindrical housing section 3 depicted in FIG. 1 to FIG. 3 has the opening 31 and an opening 32 positioned on a side opposite to the opening 31. Note that the housing section 3 does not have to have the opening 32. That is, the opening 32 may be closed by a plate-like member or the like.

The housing section 3 has the opening 31. The opening 31 is defined by an end portion 30 of the housing section 3.

The to-be-protected object such as an electrical part is put inside the housing section 3 from the opening 31. Thereby, the to-be-protected object can be protected inside the housing section 3.

As depicted in FIG. 2 to FIG. 3, after the to-be-protected object is put inside the housing section 3 from the opening 31, the housing section 3 is arranged such that the opening 31 is closely attached to the surface of an attachment-receiving object 100.

The protrusions 5 are directly or indirectly continuous with the end portion 30 of the housing section 3. FIG. 1 to FIG. 3 depict a form in which the protrusions 5 are directly continuous with the end portion 30. Note that another section such as a flange may be formed on the end portion 30, and, by being continuous with the section, the protrusions 5 may become continuous with the end portion 30 indirectly.

Whereas the gasket 1 depicted in FIG. 1 to FIG. 3 has four protrusions 5, the number of the protrusions 5 is not limited particularly. Note that the gasket 1 preferably has two or more protrusions 5, more preferably has three or more protrusions 5, and further preferably has four or more protrusions 5. Thereby, superior anti-disengagement property can be attained. For example, the gasket 1 has eight or fewer protrusions 5.

In the gasket 1 depicted in FIG. 1 to FIG. 3, the four protrusions 5 are arranged evenly at the intervals of 90 degrees in the circumferential direction of the circular opening 31. In a case where the gasket 1 has two or more protrusions 5 also, the protrusions 5 are preferably arranged evenly in the circumferential direction of the opening 31.

In a case where the opening 31 is not circular, but, for example, oval or rectangular also, the protrusions 5 are preferably arranged evenly in the circumferential direction.

Each protrusion 5 has a trunk portion 51 and a branch portion 52. Each protrusion 5 depicted in FIG. 1 to FIG. 3 has only the trunk portion 51 and the branch portion 52.

The trunk portion 51 extends in a direction X (radially-outer-side direction) away from the end portion 30 in the radial direction.

In a case where the opening 31 is circular as depicted in FIG. 1 to FIG. 3, the trunk portion 51 preferably extends outward linearly from the center of the circle radially.

In a case where the opening 31 is not circular also, the trunk portion 51 preferably extends outward linearly from the center of the opening 31 radially.

The branch portion 52 extends from the trunk portion 51 in a direction different from the direction X.

The branch portion 52 depicted in FIG. 1 to FIG. 3 extends from the front end of the trunk portion 51 in a direction which is perpendicular to the direction X, and is generally parallel to the surface of the attachment-receiving object. The branch portion 52 is arranged at the front end of the trunk portion 51, and the protrusion 5 is T-shaped as a whole.

Note that it is sufficient if the branch portion 52 extends in a direction different from the direction X in which the trunk portion 51 extends. The branch portion 52 does not necessarily have to extend in a direction perpendicular to the direction X.

The protrusion 5 does not necessarily have to be T-shaped. For example, the branch portion 52 may not be positioned at the front end of the trunk portion 51, but a part of the trunk portion 51 or the like may extend ahead from the branch portion 52 in the direction X, and the protrusion 5 may have a cruciform shape as a whole.

Both the trunk portion 51 and the branch portion 52 have strip-like shapes. The trunk portion 51 and the branch portion 52 are continuous with each other. That is, both the trunk portion 51 and the branch portion 52 have certain lengths of widths, and the protrusion 5 as a whole has a form like one taken out from a thin sheet.

The main surface of the protrusion 5 (the main surfaces of the trunk portion 51 and the branch portion 52) faces the surface of the attachment-receiving object 100. Here, the surface of the attachment-receiving object 100 and the main surface of the protrusion 5 are preferably generally parallel to each other.

The shape of the protrusion 5 is explained in detail by using FIG. 4.

FIG. 4 is schematic plan view representing the main surface of the protrusion 5. In FIG. 4, the protrusion 5 is T-shaped as a whole.

As depicted in FIG. 4, both a width B of the trunk portion 51 and a width C of the branch portion 52 are preferably smaller than the diameter of an attachment hole 105 represented by a dotted line. Note that the width B and/or the width C may be the same as or slightly greater than the diameter of the attachment hole 105.

An entire length A of the branch portion 52 in a direction which is perpendicular to the direction X, and is generally parallel to the surface of the attachment-receiving object 100 is preferably greater than the diameter of the attachment hole 105.

A length D of the trunk portion 51 is not limited particularly. The trunk portion 51 preferably has such a length D that, in a state where the gasket 1 is arranged on the surface of the attachment-receiving object 100, and the protrusion 5 has not been inserted into the attachment hole 105, it is possible to attain a state where the trunk portion 51 and the branch portion 52 cover the entire attachment hole 105, and the attachment hole 105 cannot be seen, as depicted in FIG. 4.

Note that whereas the attachment hole 105 is circular in FIG. 1 to FIG. 4, the attachment hole 105 does not have to be circular. In a case where the attachment hole 105 is not circular, the diameter of the attachment hole 105 is equal to the diameter of a circle with an equal area.

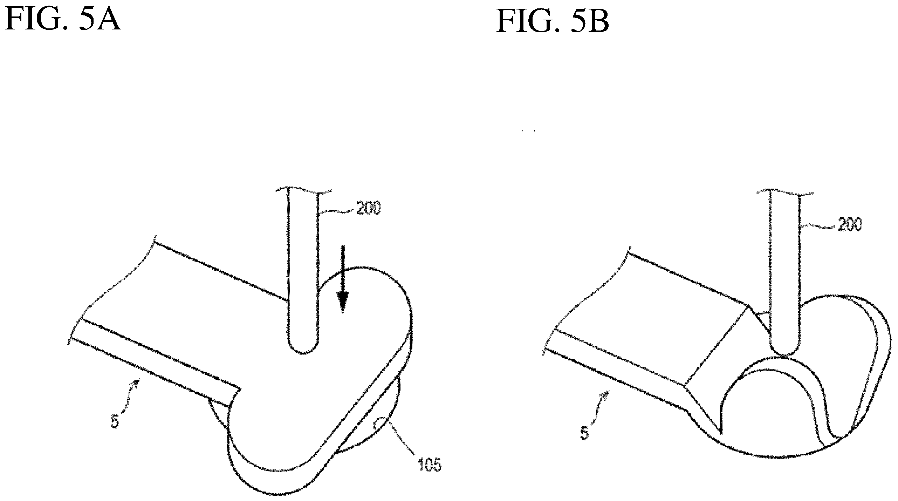

A method of attaching the gasket 1 of the present embodiment to the surface of the attachment-receiving object 100 is explained by using FIG. 5A and FIG. 5B.

As depicted in FIG. 5A, the gasket 1 is arranged on the surface of the attachment-receiving object 100. Thereafter, as depicted in FIG. 5B, a rod-like jig 200 is used to press and insert the protrusions 5 into the attachment holes 105. Then, as depicted in FIG. 2 to FIG. 3, the branch portions 52 are caught when the protrusions 5 are caused to penetrate the attachment holes 105. In this manner, the gasket 1 is attached to the surface of the attachment-receiving object 100.

Note that the method of attaching the gasket 1 to the surface of the attachment-receiving object 100 is not limited to the method explained using FIG. 5A and FIG. 5B.

In this manner, large force is not necessary for inserting the protrusions 5 into the attachment holes 105, and the gasket 1 of the present embodiment can be easily attached to the surface of the attachment-receiving object 100.

The gasket 1 of the present embodiment contributes to space saving.

In addition, the gasket 1 of the present embodiment has a shape which can be formed easily by molding.

### Reference Signs List

1: gasket
3: housing section
30: end portion
31, 32: opening
5: protrusion
51: trunk portion
52: branch portion
100: attachment-receiving object
105: attachment hole
200: jig

## Claims

1. A rubber-made gasket that can be attached to a surface of an attachment-receiving object having an attachment hole, the rubber-made gasket comprising:
a housing section having an opening to be closely attached to the attachment-receiving object; and
a protrusion that is directly or indirectly continuous with an end portion of the housing section, and has a main surface to face a surface of the attachment-receiving object, the protrusion having: a strip-like trunk portion extending from the end portion in a radially-outer-side direction of the housing section; and a strip-like branch portion extending from the trunk portion in a direction different from a radial direction of the housing section, the protrusion being able to be inserted into the attachment hole.

2. The gasket according to claim 1, wherein the housing section is cylindrical.

3. The gasket according to claim 1 or 2, comprising a plurality of the protrusions that are arranged evenly in a circumferential direction of the opening.

4. The gasket according to any one of claims 1 to 3, wherein the branch portion extends from the trunk portion in a direction perpendicular to the radially-outer-side direction of the housing section.

5. The gasket according to any one of claims 1 to 4, wherein the branch portion is arranged at a front end of the trunk portion.

6. The gasket according to any one of claims 1 to 5, wherein the trunk portion and the branch portion are continuous.

7. The gasket according to any one of claims 1 to 6, wherein both a width of the trunk portion and a width of the branch portion are smaller than a diameter of the attachment hole.

8. The gasket according to any one of claims 1 to 7, wherein an entire length of the branch portion in a direction perpendicular to the radial direction of the housing section is greater than a diameter of the attachment hole.

9. The gasket according to any one of claims 1 to 8, wherein the branch portion is caught by the attachment-receiving object when the protrusion is inserted into the attachment hole.
